(19) Europäisches Patentamt
European Patent Office
Office européen des brevets

(11) **EP 1 559 596 B1**

(12) **EUROPÄISCHE PATENTSCHRIFT**

(45) Veröffentlichungstag und Bekanntmachung des Hinweises auf die Patenterteilung:
**26.03.2008   Patentblatt 2008/13**

(51) Int Cl.:
**B60G 17/015** (2006.01)   **B60G 17/04** (2006.01)
**B60G 15/12** (2006.01)   **B62D 55/112** (2006.01)
**B62D 55/30** (2006.01)

(21) Anmeldenummer: **04405061.5**

(22) Anmeldetag: **30.01.2004**

(54) **Hydropneumatische Federungsvorrichtung und Verfahren zum Ansteuern derselben**

Hydropneumatic suspension system and control method associated

Dispositif de suspension hydropneumatique et méthode de commande associée

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**03.08.2005   Patentblatt 2005/31**

(73) Patentinhaber: **Curtiss-Wright Antriebstechnik GmbH**
**8212 Neuhausen am Rheinfall (CH)**

(72) Erfinder:
• **Gabriel, Stefan**
  **8212 Neuhausen am Rheinfall (CH)**
• **Züllig, Roland**
  **8215 Hallau (CH)**
• **Beer, Hanspeter**
  **8222 Beringen (CH)**
• **van den Berg, Michael**
  **79787 Lauchringen (DE)**

• **Walch, Christian**
  **8413 Neftenbach (CH)**
• **Kleiber, Michael**
  **8447 Dachsen (CH)**

(74) Vertreter: **Dr. Graf & Partner**
**Intellectual Property,**
**Postfach 518**
**8200 Schaffhausen (CH)**

(56) Entgegenhaltungen:
**DE-B- 1 091 905          GB-A- 997 224**
**US-A- 3 897 940          US-A- 5 586 781**
**US-A1- 2003 107 191**

• **PATENT ABSTRACTS OF JAPAN Bd. 0163, Nr. 21 (M-1279), 14. Juli 1992 (1992-07-14) & JP 4 090917 A (HINO MOTORS LTD), 24. März 1992 (1992-03-24)**

EP 1 559 596 B1

**Beschreibung**

Die Erfindung betrifft eine hydropneumatische Federungsvorrichtung gemäss dem Oberbegriff von Anspruch 1. Die Erfindung betrifft weiter ein Verfahren zum Ansteuern der hydropneumatischen Federungsvorrichtung gemäss dem Oberbegriff von Anspruch 11.

Eine hydropneumatische Federung besteht im allgemeinen aus einem Gasvolumen und einem Flüssigkeitsvolumen, die über einen Trennkolben in einer festen Gehäusekombination aufgenommen sind. Die hydropneumatische Federungsvorrichtung besteht aus drei Kammern. Eine erste Kammer ist für die Aufnahme von Flüssigkeitsvolumen bestimmt. Dieses Flüssigkeitsvolumen ist veränderbar, indem Gehäuseteile in irgendeiner Art und Weise zusammengeschoben oder auseinandergeschoben werden. Eine zweite Kammer ist mit der ersten Kammer über eine Drossel fluidleitend verbunden. Die zweite Kammer ist für die Aufnahme bzw. Abgabe der Flüssigkeit von bzw. an die erste Kammer vorgesehen. Das Flüssigkeitsvolumen der ersten Kammer und der zweiten Kammer zusammen ist konstant. Die dritte Kammer ist mit einem komprimierbaren Medium, wie zum Beispiel Gas, gefüllt. Die dritte Kammer ist durch einen beweglichen Kolben von der zweiten Kammer getrennt.

Die hydropneumatische Federungsvorrichtung ist beispielsweise einerseits am Rahmen eines Fahrzeuges und andererseits an einer beweglichen Achse oder einer beweglichen Radaufhängung befestigt. Eine Bewegung zwischen den beiden Befestigungspunkten bewirkt eine Volumenänderung der ersten Kammer. Dadurch wird das Medium in der dritten Kammer über die zweite Kammer komprimiert bzw. dekomprimiert. Dies bewirkt eine Ein- oder Ausfederung. Die Bewegung wird über die Drossel zwischen der ersten Kammer und der zweiten Kammer gedämpft. Eine derartige hydropneumatische Federung wird auch als Hydropfeder bezeichnet.

Das Dokument JP-A-04090917 offenbart eine hydropneumatische Federungsvorrichtung umfassend eine Hydropfeder mit einer Gaskammer, welche über ein Steuerventil strömungstechnisch mit einer Dosiervorrichtung verbunden ist. Nachteilig an mit derartigen Hydropfedern ausgestatteten Fahrzeugen ist die Tatsache, dass sich das Federungsverhalten der einzelnen Hydropfedern auf Grund von Umwelteinflüssen wie Temperaturänderungen oder unterschiedlichen Betriebszuständen verändern kann, auch während dem Betrieb, was zur Folge hat, dass sich das Fahrverhalten und/oder die Fahrzeughöhe des Fahrzeuges verändert. Diese Effekte treten insbesondere bei geländegängigen Fahrzeugen auf, bei welchen die Hydropfedern auf Grund der Unebenheiten des Untergrundes einer besonders starken Belastung ausgesetzt sind. Besonders nachteilig wirken sich diese Effekte bei mit Hydropfedern ausgerüsteten Kettenfahrzeugen aus, weil diese Effekte zudem noch die Spannung der Kette beeinflusst. Dies kann einen erhöhten Verschleiss der Kette zur Folge haben, und / oder im schlimmsten Fall die Ursache für einen Kettenabwurf oder eine Nichtlenkbarkeit bzw. eine Nichtbremsbarkeit des Fahrzeuges sein.

Es ist daher die Aufgabe der vorliegenden Erfindung eine hydropneumatische Federungsvorrichtung sowie ein Verfahren zum Steuern einer hydropneumatischen Federungsvorrichtung zu bilden, welche einen zuverlässigeren Betrieb von mit Hydropfedern ausgestatteten Rad- oder Kettenfahrzeugen ermöglicht.

Diese Aufgabe wird gelöst mit einer hydropneumatischen Federungsvorrichtung aufweisend die Merkmale von Anspruch 1. Die Aufgabe wird weiter gelöst mit einem Verfahren zum Steuern einer hydropneumatischen Federungsvorrichtung aufweisend die Merkmale von Anspruch 11. Vorteilhafte Ausführungsformen ergeben sich aus den Unteransprüchen.

Die Aufgabe wird insbesondere gelöst mit einer hydropneumatischen Federungsvorrichtung umfassend zumindest eine Hydropfeder mit einer Gaskammer, welche über ein Steuerventil strömungstechnisch mit einer Dosiervorrichtung verbunden ist, umfassend einen Sensor zur Bestimmung der Temperatur des Gases in der Gaskammer, sowie umfassend eine Ansteuerungsvorrichtung, wobei die Ansteuerungsvorrichtung derart ausgestaltet ist, dass sie die den Messwert über den Sensor erfasst, daraus ein Kompensationsvolumen berechnet, und die Dosiervorrichtung und das Steuerventil derart ansteuert, dass das Kompensationsvolumen der Gaskammer zu- oder abgeführt wird.

Die Aufgabe wird zudem insbesondere gelöst mit einem Verfahren zum Steuern einer hydropneumatischen Federungsvorrichtung umfassend zumindest eine Hydropfeder, die strömungstechnisch mit einer Dosiervorrichtung verbindbar ist, wobei die Temperatur des Gases in der Gaskammer der Hydropfeder gemessen wird, in Abhängigkeit dieses gemessenen Wertes ein Kompensationsvolumen bestimmt wird, und die Dosiervorrichtung derart angesteuert wird, dass diese das Kompensationsvolumen an die Gaskammer abgibt oder der Gaskammer entnimmt.

Unter Gas wird nachfolgend auch ein komprimierbares Fluid verstanden, welches bezüglich Temperatur- und Druckverhalten gasähnliche Eigenschaften aufweist, beispielsweise eine komprimierbare Flüssigkeit. Unter Gaskammer wird ein Hohlraum verstanden, welcher ein Gas oder die vorhin genannte komprimierbare Flüssigkeit enthalten kann. Unter Fahrzeug wird insbesondere ein Kraftfahrzeug verstanden, insbesondere mit einem Verbrennungsmotor.

Die erfindungsgemässe hydropneumatische Federungsvorrichtung bzw. das Verfahren zu deren Ansteuerung weist insbesondere den Vorteil auf, dass die Änderungen des Federungsverhaltens der hydropneumatischen Federungsvorrichtung, welche als Folge der Temperaturänderung des Gases in der Hydropfeder auftreten, im wesentlichen kompensiert werden.

In einer bevorzugten Ausführungsform weist die Hydropfeder in einem Grundzustand, z.B. in Ruhelage, unabhängig von Temperaturveränderungen im wesentlichen dieselbe Länge auf, weil die durch eine Temperaturveränderung bedingte Volumenveränderung des Gases in der Gaskammer der Hydropfeder durch ein Kompensationsvolumen kompensiert wird, indem dieses Kompensationsvolumen der Gaskammer mit Hilfe einer Dosiervorrichtung entweder zu- oder abgeführt wird.

Das Kompensationsvolumen kann beispielsweise in regelmässigen zeitlichen Abständen, oder beim Überschreiten einer vorgebbaren Temperaturänderung, einer vorgegebenen Temperatur, oder eines vorgegebenen Drucks der Gaskammer zu- bzw. abgeführt werden.

In Kombination mit einem Fahrzeug kann das Kompensationsvolumen in definierten oder beliebigen Fahrtzuständen der Gaskammer zu- bzw. abgeführt werden, beispielsweise bei Fahrzeugstillstand, bei Fahrt auf ebener Strasse oder bei Fahrt im Gelände. In einer bevorzugten Ausführungsform weist die Hydropfeder in Kombination mit einem Fahrzeug in einem Grundzustand unabhängig von Temperaturveränderungen im wesentlichen dieselbe Länge auf. Unter einem Grundzustand des Fahrzeuges kann beispielsweise eine definierte Lage oder eine definierte Höhe des Fahrzeuges ab Boden, eine definierte Länge der Hydropfeder oder ein definierter Druck in der Hydropfeder verstanden werden, wobei sich das Fahrzeug bei diesem Grundzustand vorzugsweise im Stillstand befindet.

Die erfindungsgemässe Vorrichtung weist zudem den Vorteil auf, dass wenige robuste elektrische, elektronische und mechanische Komponenten erforderlich sind, sodass die erfindungsgemässe hydropneumatische Federungsvorrichtung insbesondere für rauen Einsatz, beispielsweise auch für militärische Anwendungen, geeignet ist.

In einer einfachen Ausführungsform ist nur ein Temperatursensor zur Bestimmung der Temperatur des Gases in der Gaskammer der Hydropfeder, eine Dosiervorrichtung sowie eine Ansteuerungsvorrichtung erforderlich. In einer weiteren Ausführungsform ist zusätzlich ein Drucksensor zum Messen des Gasdruckes in der Gaskammer der Hydropfeder, eine Dosiervorrichtung sowie eine Ansteuerungsvorrichtung erforderlich. In einer weiteren vorteilhaften Ausführungsform ist zudem ein Drucksensor zum Messen des Gasdruckes in der Dosiervorrichtung erforderlich. Diese Ausführungsformen weisen den Vorteil auf, dass sie sehr robust, einfach, zuverlässig und reparaturfreundlich sind, da sowohl der Temperatur- als auch der Drucksensor äusserst zuverlässige Standardkomponenten sind. Zudem kann auch die Ansteuervorrichtung einfach ausgestaltet sein, da zur Ansteuerung der Dosiervorrichtung kein komplexer Rechner erforderlich ist.

Die Anordnung zur Versorgung der Hydropfeder mit dem Kompensationsvolumen kann auf unterschiedliche Weise ausgestaltet sein. So kann jede Hydropfeder mit einer separaten Dosiervorrichtung verbunden sein. Es können jedoch auch eine Mehrzahl von Hydropfedern über Steuerventile strömungstechnisch mit einer einzigen Dosiervorrichtung verbunden sein, wobei über eine entsprechende Ansteuerung der Steuerventile den Hydropfedern einzeln nacheinander oder zeitgleich ein Kompensationsvolumen zuführbar ist.

Die erfindungsgemässe Federungsvorrichtung ist besonders vorteilhaft in Verbindung mit Kettenfahrzeugen. Die Kettenfahrzeuge weisen eine von einem Kettenlaufwerk getragene, umlaufende Kette aufweisen, wobei die Hydropfedern derart angeordnet sind, dass diese die Kettenspannung beeinflussen. Bevorzugt sind die Hydropfedern beim Kettenfahrzeug einerseits mit einem Laufwerkträger bzw. mit einer Fahrzeugwanne und andererseits mit einer Laufrolle für die Kette verbunden, sodass jede Hydropfeder eine federnde Verbindung zwischen der Laufrolle bzw. der Kette und der Fahrzeugwanne bildet. Die Hydropfedern werden vorzugsweise derart mit Kompensationsvolumen versorgt, dass die Kette während dem Betrieb des Kettenfahrzeuges bezüglich einem Grundzustand, beispielsweise Stillstand, eine im wesentlichen konstante Spannung aufweist. Wird ein Kettenfahrzeug bei tiefer Aussentemperatur in Betrieb genommen, beispielsweise frühmorgens, so weisen die Hydropfedern eine verkürzte Länge auf, auf Grund der tiefen Temperatur des Gases in der Gaskammer. Die Kette weist daher eine zu tiefe Spannung auf. Durch das Einbringen eines Kompensationsvolumens in die Gaskammer der Hydropfedern kann nun, beispielsweise bevor das Kettenfahrzeug in Bewegung gesetzt wird, die Spannung der Kette auf einen vorbestimmten Wert erhöht werden. Während der Fahrt des Kettenfahrzeuges erwärmt sich das Gas in der Gaskammer aufgrund der Reibung bei ständiger Aus- und Einfederung der Hydropfeder, was eine erhöhte Kettenspannung zur Folge hat. Durch das Abführen eines Kompensationsvolumens aus der Gaskammer der Hydropfedern kann nun, beispielsweise bei Stillstand des Kettfahrzeuges, die Spannung der Kette reduziert werden. Im einfachsten Fall genügt es die Temperatur oder den Druck des Gases in der Gaskammer zu messen, um daraus das Kompensationsvolumen zu berechnen. Das Kompensationsvolumen kann, weil Temperatur oder Druck jederzeit messbar sind, somit auch während der Fahrt berechnet werden, und der Gaskammer der Hydropfeder kann auch während der Fahrt des Kettfahrzeuges, insbesondere bei einer Fahrt mit geringen Federbewegungen der Hydropfeder wie beispielsweise auf ebener Strasse, ein Kompensationsvolumen zu- bzw. abgeführt werden. Da beim Kettenfahrzeug der Druck des Gases in der Gaskammer einer Hydropfeder in einer Beziehung zur Spannung der Kette steht, ist es möglich den Druck dieses Gases zu messen, aus diesem gemessenen Wert ein Kompensationsvolumen zu berechnen, und dieses daraufhin der Gaskammer zuzuführen, um eine im wesentliche konstante Kettenspannung zu erlangen.

In einer weiteren vorteilhaften Ausführungsform ist zudem ein Drucksensor zum Messen des Gasdruckes in der Dosiervorrichtung erforderlich.

In einer bevorzugten Ausgestaltung ist die Dosiervorrichtung als Dosierzylinder mit einem verschiebbaren Kolben und einem Dosiervolumen ausgebildet. Die Dosiervorrichtung könnte beispielsweise auch als Dosierpumpe ausgestaltet sein.

Die Erfindung wird nachfolgend an Hand mehrerer Ausführungsbeispiele im Detail beschrieben. Es zeigen:

Figur 1      eine schematische Ansicht einer Hydropfeder mit Dosierzylinder und Ansteuerungsvorrichtung;

Figur 2      schematisch eine weitere Ausführungsform eines Dosierzylinders;

Figur 3      eine schematische Ansicht einer hydropneumatischen Federungsvorrichtung eines Fahrzeuges mit einer Mehrzahl von Einzelrädern, welchen je eine Hydropfeder zugeordnet ist;

Figur 4      eine schematische Ansicht eines Kettenfahrzeuges mit zwei Hydropfedern;

Figur 5      schematisch die Ansteuerung von zwei getrennten Federmodulen mit Hydropfedern;

Figur 6      eine schematische Draufsicht auf ein Kettenfahrzeug mit zwei getrennten Federmodulen;

Figur 7      ein Ausführungsbeispiel einer Hydropfeder.

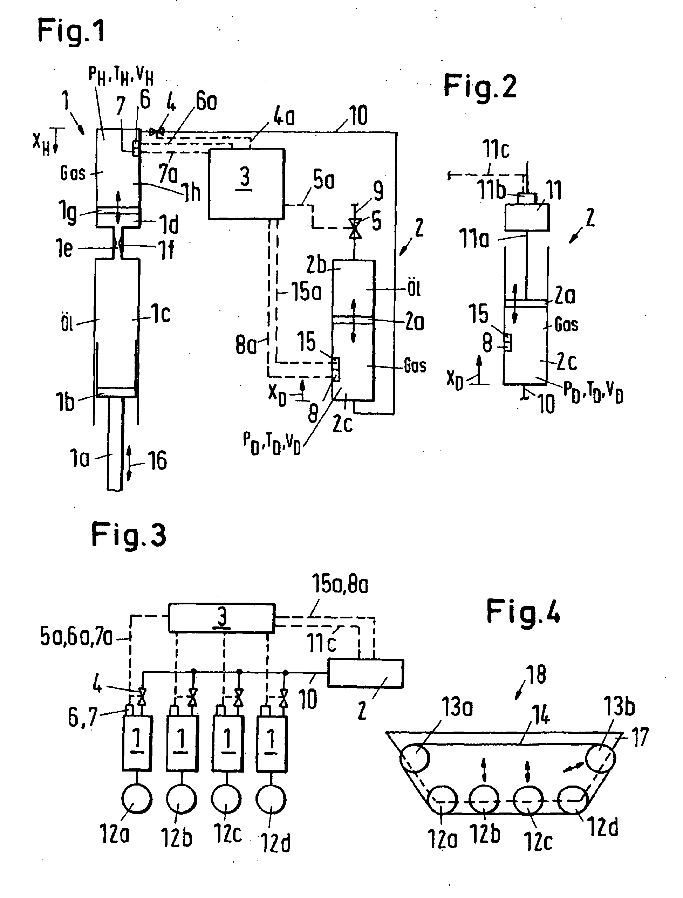

Die in Figur 1 schematisch dargestellte hydropneumatische Federungsvorrichtung umfasst eine Hydropfeder 1, welche über ein Steuerventil 4 und eine Leitung 10 strömungstechnisch mit einem Dosierzylinder 2 verbunden ist. Die vereinfacht dargestellte Hydropfeder 1 umfasst ein vertikal verschiebbares Verbindungsmittel 1a, an dessen unterem Ende ein nicht dargestelltes Rad bzw. Radhalterung befestigt ist. Das Verbindungsmittel 1a ist fest mit einem verschiebbar gelagerten Kolben 1b mit Gehäuseteil verbunden, wobei der Kolben 1b mit Gehäuseteil sowie das feste Gehäuse der Hydropfeder 1 ein Flüssigkeitsvolumen begrenzen, welches ein erstes Teilvolumen 1c sowie ein zweites Teilvolumen 1d aufweist. Das erste Teilvolumen 1c wird auch als erste Kammer, das zweite Teilvolumen 1d als zweite Kammer bezeichnet. Das erste und zweite Teilvolumen 1c, 1d sind über eine Ausgleichsleitung 1e mit Drossel 1f Fluid leitend verbunden. Das Flüssigkeitsvolumen ist vorzugsweise mit Öl gefüllt. Ein Gasvolumen 1h, auch als dritte Kammer bezeichnet, ist durch das feste Gehäuse der Hydropfeder 1 und einem Trennkolben 1g begrenzt, wobei der verschiebbare Trennkolben 1g das zweite Teilvolumen 1d sowie die Gaskammer 1h begrenzt. Im dargestellten Ausführungsbeispiel ist die Hydropfeder 1 mit einem Temperatursensor 6 sowie mit einem Drucksensor 7 versehen, um in der Gaskammer 1h die Temperatur sowie den Druck des sich darin befindlichen Gases zu messen. Beide Sensoren 6,7 sind über Signalleitungen 6a, 7a mit einer Ansteuerungsvorrichtung 3 verbunden. Es ist eine Vielzahl von Ausführungsformen bekannt um mit dem Temperatursensor 6 die Temperatur des Gases zu messen, wobei die Temperatur beispielsweise direkt mit einem innerhalb der Gaskammer 1h angeordneten Sensor gemessen werden kann, oder beispielweise auch indirekt, indem nur die Gehäusetemperatur an geeigneter Stelle der Hydropfeder 1 gemessen wird. Der Dosierzylinder 2 umfasst einen verschiebbar gelagerten Dosierkolben 2a, welcher eine Ölkammer 2b von einem mit Gas gefüllten Dosiervolumen 2c trennt. Die Ölkammer 2b ist über ein Steuerventil 5 mit einer Öldruckleitung 9 verbunden. Im dargestellten Ausführungsbeispiel ist der Dosierzylinder 2 mit einem Drucksensor 8 sowie einem Temperatursensor 15 versehen, um im Dosierzylinder 2 die Temperatur sowie den Druck des sich darin befindlichen Gases zu messen. Beide Sensoren 8, 15 sowie das Steuerventil 5 sind über Signalleitungen 8a, 15a, 5a mit der Ansteuerungsvorrichtung 3 verbunden. Das Steuerventil 5 kann beispielsweise Mittels einer Zeitsteuerung angesteuert werden, indem das Steuerventil 5 während einer vorgebbaren Zeitdauer geöffnet wird, um derart eine definierte Menge Öl der Ölkammer 2b zu- oder abzuführen. Die in Figur 1 dargestellte Anordnung könnte auch nur einen Temperatursensor 6 oder einen Drucksensor 7 aufweisen, sofern dies genügen würde um ein Korrekturvolumen Vk zu berechnen.

Figur 2 zeigt ein weiteres Ausführungsbeispiel eines Dosierzylinders 2 mit einem verschiebbar gelagerten Dosierkolben 2a, der ein Gas gefülltes Dosiervolumen 2c begrenzt. Ein elektrischer Antrieb 11 ist über eine Verbindungswelle 11a mit dem Dosierkolben 2a verbunden, um diesen in der mit einem Pfeil dargestellten Richtung zu bewegen. Der elektrische Antrieb 11 ist über eine elektrische Leitung 11c mit der Ansteuerungsvorrichtung 3 verbunden. Zudem umfasst der elektrische Antrieb 11 einen Drehwinkelsensor 11b, welcher ebenfalls über die elektrische Leitung 11c mit der Ansteuerungsvorrichtung 3 verbunden ist, und mit welchem die Lage $x_D$ des Dosierkolbens 2a messbar ist.

Die in Figur 3 dargestellte Federungsvorrichtung weist, im Unterschied zu der in Figur 1 dargestellten Federungsvorrichtung, vier Hydropfedern 1 auf, wobei jede Hydropfeder 1 mit einem Rad 12a, 12b, 12c, 12d verbunden ist, sowie einen Temperatursensor 6 und gegebenenfalls einen Drucksensor 7 aufweist. Jede einzelne Hydropfeder 1 kann über ein Steuerventil 4 und eine gemeinsame Speiseleitung 10 mit dem Dosierzylinder 2 verbunden werden. Jede Hydropfeder 1 sowie der Dosierzylinder 2 sind signalleitend mit der Ansteuerungsvorrichtung 3 verbunden, um die Steuerventile 4 der Hydropfedern 1 sowie den Dosierzylinder 2 durch die Ansteuervorrichtung 3 zu kontrollieren. Ein Fahrzeug könnte beispielsweise zwei, vier, sechs oder acht Räder 12a, 12b, 12c, 12d aufweisen, welche je über eine Hydropfeder 1 mit dem Fahrzeugrahmen des Fahrzeuges verbunden sind. So könnte beispielsweise ein geländegängiges Radfahrzeug auf jeder Seite vier in Fahrtrichtung hintereinander angeordnete Räder 12a, 12b, 12c, 12d mit Hydropfedern 1 aufweisen.

Figur 4 zeigt schematisch ein Kettenlaufwerk eines Kettenfahrzeuges, wobei die umlaufende Kette 14 von den Rollen 12a, 12b, 12c, 12d sowie den Umlenkrollen 13a, 13b getragen ist. Die Umlenkrollen 13a, 13b werden bei Kettfahrzeugen auch als Leitrad beziehungsweise Treibrad bezeichnet. Die Rollen 12b, 12c sind über je eine Hydropfeder 1 mit einem gemeinsamen Laufwerkträger 17 verbunden und in der dargestellten Richtung verschiebbar gelagert. Die Räder 12a und 12d weisen keine Hydropfedern 1 auf und sind beispielsweise mit einer konventionellen mechanischen Feder mit dem Laufwerkträger 17 verbunden. Die Spannung der Kette 14 kann über die mit den Rollen 12b, 12c verbundenen Hydropfedern 1 beeinflusst werden. In einem weiteren Ausführungsbeispiel könnte beispielsweise nur die Umlenkrolle 13b oder zusätzlich auch die Rollen 12b, 12c mit einer Hydropfeder 1 verbunden sein, wobei die Rollen 12b, 12c, 13b in der dargestellten Richtung beweglich gelagert sind, um durch ein Ansteuern der Hydropfedern 1 die Spannung der Kette 14 und/oder die Fahrzeughöhe zu beeinflussen. In einer weiteren Ausführungsform sind alle Rollen 12a, 12b, 12c, 12d jeweils über eine Hydropfeder 1 mit dem Laufwerkträger 17 verbunden, wobei zumindest eine der Hydropfedern 1 strömungstechnisch mit einer Dosiervorrichtung 2 verbunden ist und somit der Gaskammer 1h der Hydropfeder 1 ein Kompensationsvolumen zuführbar oder abführbar ist, wogegen die restlichen Hydropfedern 1 keine fluidleitende Verbindung zu einer Dosiervorrichtung 2 aufweisen, sodass der jeweiligen Gaskammer 1h dieser Hydropfedern 1 kein Kompensationsvolumen Vk zuführbar ist und diese Hydropfedern 1 nicht ansteuerbar sind.

In einer vorteilhaften Ausgestaltung umfassen auch diese nicht ansteuerbaren Hydropfedern 1 einen Temperatur 6,7 zur Bestimmung der Temperatur des Gases in der jeweiligen Gaskammer 1h. Bei der Berechnung des Kompensationsvolumens für die ansteuerbaren Hydropfedern 1 wird der Zustand der nicht ansteuerbaren Hydropfedern 1 über die Messung von deren Temperatur berücksichtigt, und das Kompensationsvolumen derart berechnet, dass das Kettenfahrzeug insbesondere eine vorgegebene Höhe und/oder eine vorgegebene Kettenspannung aufweist.

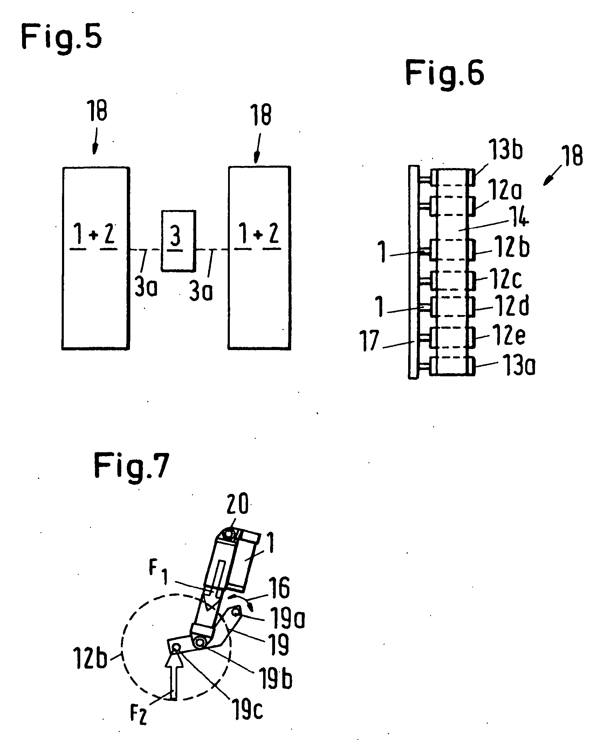

Figur 6 zeigt eine Draufsicht auf ein Laufwerk 18, welches eine Mehrzahl von Rollen 12a, 12b, 12c, 12d, 12e und Umlenkrollen 13a, 13b umfasst, die mit einem gemeinsamen Laufwerkträger 17 verbunden sind, wobei die Rollen 12b und 12d über je eine Hydropfeder 1 mit dem gemeinsamen Laufwerkträger 17 verbunden sind. Alle anderen Rollen 12a, 12c, 12e sind über eine mechanische Feder wie ein Torsionsstab oder eine nicht ansteuerbare Hydropfeder (1) mit dem Laufwerkträger 17 verbunden. Alle Rollen zusammen bilden ein Kettenlaufwerk, auf welchem eine umlaufende Kette 14 aufliegt.

Es könnten auch die in Figur 3 dargestellten, einzelnen Räder 12a, 12b, 12c, 12d über die Hydropfedern 1 mit einem gemeinsamen Laufwerkträger 17 verbunden sein und derart ein Laufwerk ausbilden. Unter Laufwerk wird somit auch ein Fahrwerk mit Rädern verstanden.

In einer vorteilhaften Ausgestaltung bildet das in Figur 6 dargestellte Laufwerk 18 eine separate Einheit, und umfasst zudem noch den Dosierzylinder 2, sodass das Laufwerk 18, wie in Figur 5 dargestellt, das gesamte linke oder rechte Laufwerk eines Rad- oder Kettenfahrzeuges umfasst, wobei die beiden Laufwerke 18 beispielsweise von einer gemeinsamen Ansteuerungsvorrichtung 3 mit Steuerleitungen 3a ansteuerbar sind.

Figur 7 zeigt ein Ausführungsbeispiel der in Figur 1 vereinfacht dargestellten Hydropfeder 1. Ein Hebelarm 19 ist am Punkt 19a drehbar mit dem gemeinsamen Laufwerkträger 17 verbunden und am Punkt 19c mit dem Rad 12b verbunden. Die Hydropfeder 1 ist am Punkt 20 drehbar mit dem gemeinsamen Laufwerkträger 17 verbunden und am Punkt 19b drehbar mit dem Hebelarm 19 verbunden. Somit ist das Rad 12b bezüglich dem gemeinsamen Laufwerkträger 17 in vertikaler Richtung federn gelagert, wobei am Rad 12b eine Kraft F2 angreift, was in der Hydropfeder 1 eine Reaktionskraft F1 zur Folge hat.

Nachfolgend wird an Hand eines Ausführungsbeispiels beschrieben, wie der Gaskammer 1h ein Kompensationsvolumen Vk zu- oder abzuführen ist, damit die Hydropfeder 1 in einem Grundzustand temperaturunabhängig oder unabhängig von Temperaturschwankungen eine im wesentlichen konstante Auslenkung bzw. Länge aufweist. Für ein Fahrzeug, dessen Räder alle über je eine Hydropfeder 1 mit dem Fahrzeuggehäuse verbunden sind bedeutet dies, dass das Fahrzeug in einem Grundzustand eine im wesentlichen konstante Höhe aufweist, unabhängig von der Temperatur des Gases in der Gaskammer 1h der Hydropfeder 1. Unter dem Grundzustand wird beispielsweise eine Ruhelage beziehungsweise der Stillstand des Fahrzeuges verstanden. Dieser Zustand ist natürlich während der Fahrt des Fahrzeuges nicht gegeben, da die Hydropfedern 1 durch deren Aus- und Einfederung ständig bewegt werden. Das erfindungsgemässe Verfahren weist den Vorteil auf, dass eine Berechnung des Kompensationsvolumens auch während der Fahrt, beziehungsweise auch wenn sich das Fahrzeug nicht in einer Ruhelage befindet, durchgeführt werden kann, weil in einer bevorzugten Ausgestaltung als einzige erforderliche Messgrösse der Hydropfeder 1 die Temperatur bzw. der Druck des Gases in der Gaskammer zu messen ist, was natürlich auch während der Fahrt möglich ist.

Das Verfahren wird mit Hilfe der in Figur 1 dargestellten hydropneumatischen Federungsvorrichtung erläutert, wobei als Dosierzylinder 2 nicht der in Figur 1 dargestellt, sondern der in Figur 2 dargestellt verwendet wird. In den Figuren 1 und 2 sind die zum Verständnis des Verfahrens wichtigen Parameter dargestellt, welche sind:

#### 1. Ausgangssituation

Parameter der Hydropfeder 1:

$p_H$: Gasdruck in der Gaskammer 1h der Hydropfeder 1
$T_H$: Gastemperatur in der Gaskammer 1h
$x_H$: Position des Trennkolbens 1g beziehungsweise des Kolbens 1b
$V_H$: Volumen der Gaskammer 1h,

$$V_H = \text{Querschnittsfläche der Gaskammer} * x_H .$$

Parameter des Dosierzylinders 2:

$p_D$: Gasdruck im Dosiervolumen 2c des Dosierzylinders 2
$T_D$: Gastemperatur im Dosiervolumen 2c
$x_D$: Position des Dosierkolbens 2a
$V_D$: Volumen des Dosiervolumens 2c,

$$V_D = \text{Querschnittsfläche des Dosierzylinders } 2 * x_D .$$

Die folgenden Parameter werden mit Sensoren erfasst:

- Die Gastemperatur $T_H$ mit dem Temperatursensor 6
- Der Gasdruck $p_D$ mit dem Drucksensor 8
- Die Position $x_D$ mit dem Drehwinkelsensor 11b

#### 2. Temperaturerhöhung des Gases in der Hydropfeder

Bei einer Temperaturerhöhung ändern sich die Parameter wie folgt (eine Temperaturerniedrigung würde die Parameter entgegengesetzt ändern):

Parameter der Hydropfeder 1:

$p_{H2}$: Der Gasdruck bleibt konstant, da das Gesamtwicht des Fahrzeuges konstant bleibt.

$$p_{H2} = p_H.$$

$T_{H2}$: Die Gastemperatur in der Gaskammer 1h ist höher als $T_H$.
$V_{H2}$: Das Volumen der Gaskammer 1h ist höher und berechnet sich aus $V_{H2} = V_H * T_{H2}/T_H$
$X_{H2}$: Die Position des Trennkolbens 1g vergrössert sich, wodurch das Verbindungsmittel 1a bewegt wird. Üblicherweise bewirkt dies eine Verlängerung der Hydropfeder. Die Gesamtlänge der in Figur 7 dargestellten Hydropfeder 1 zwischen den Drehpunkten 19b und 20 wird durch die Temperaturerhöhung um $\Delta x_{H2}$ verlängert.

$$\Delta x_{H2} = (V_{H2} - V_H)/ \text{ Querschnittsfläche der Gaskammer}$$

$$x_{H2} = x_{H1} + \Delta x_{H2}$$

Parameter des Dosierzylinders 2:

$T_{D2}$: Die Gastemperatur im Dosiervolumen 2c ist nicht bekannt

$p_{D2}$: Gemessener Gasdruck im Dosiervolumen 2c, welcher auf Grund der höheren Temperatur $T_{D2}$ angestiegen ist.

$x_{D2}$: Die Position des Dosierkolbens 2a ist unverändert

$$x_{D2} = x_D$$

$V_{D2}$: Das Volumen des Dosiervolumens 2c ist unverändert

$$V_{D2} = V_D.$$

### 3. Erstellung einer Fluid leitenden Verbindung zwischen Gaskammer und Dosiervolumen.

Beim Öffnen des Steuerventils 4 ändern sich die Parameter wie folgt:

Parameter der Hydropfeder 1:

$p_{H3}$: Der Gasdruck beleibt konstant,

$$p_{H3} = p_{H2}.$$

$T_{H3}$: Die Gastemperatur bleibt konstant,

$$T_{H3} = T_{H2}$$

$V_{H3}$: Das Volumen verändert sich durch einströmendes Gas aus dem Dosierzylinder 2,

$$\Delta V_{H3} = V_D - V_D * p_H / p_{D2}$$

$x_{H3}$: Die Position des Trennkolbens 1g verändert sich

$$\Delta x_{H3} = \Delta V_{H3} / \text{Querschnittsfläche der Gaskammer}$$
$$x_{H3} = x_{H1} + \Delta x_{H2} + \Delta x_{H3}$$

Parameter des Dosierzylinders 2:

$T_{D3}$: Die Gastemperatur im Dosiervolumen 2c ist nicht bekannt

$p_{D3}$: Der gemessene Gasdruck im Dosiervolumen 2c, sinkt durch den Ausgleich,

$$p_{D3} = p_{H1}$$

$X_{D3}$: Die Position des Dosierkolbens 2a ist unverändert

$$x_{D3} = x_D$$

$V_{D3}$:  Das Volumen des Dosiervolumens 2c ist unverändert

$$V_{D3} = V_D.$$

4. Berechnung des Kompensationsvolumens Vk

Parameter der Hydropfeder 1:

$p_{H4}$:  Der Gasdruck beleibt konstant,

$$p_{H4} = p_{H2}.$$

$T_{H4}$:  Die Gastemperatur bleibt konstant,

$$T_{H4} = T_{H2}$$

$X_{H4}$:  die zu erreichende Position des Trennkolbens 1g ist bekannt: $X_{H4} = X_{H1}$, es ist daher eine Verschiebung um $\Delta x_{H4} = -\Delta x_{H3} - \Delta x_{H2}$ erforderlich.

Parameter des Dosierzylinders 2:

$T_{D4}$:  Die Gastemperatur im Dosiervolumen 2c ist nicht bekannt
$p_{D4}$:  Der gemessene Gasdruck ist bekannt.

$$p_{D3} = p_{H1}.$$

$x_{D4}$:  Die Zielposition des Dosierkolbens 2a wird berechnet. Die erforderliche Korrektur beträgt:

$$\Delta x_{D4} = -\Delta x_{H4} * \text{Querschnittsfläche der Gaskammer / Querschnittfläche Dosiervolumen}$$

Das erforderliche Kompensationsvolumen Vk ist

$$Vk = \Delta x_{D4} * \text{Querschnittfläche Dosiervolumen der Hydropfeder}$$

5. Abführen des Kompensationsvolumens Vk

Der Dosierkolben 2a des Dosierzylinders 2 wird somit die Distanz $\Delta x_{D4}$ verfahren und der Hydropfeder das Kompensationsvolumen Vk entnehmen. Danach wird das Steuerventil 4 geschlossen, sodass die Gaskammer 1h vom Dosierzylinder 2 getrennt ist.

Senkt sich die Gastemperatur in der Gaskammer, so wird in analoger Weise ein Kompensationsvolumen Vk berechnet, und dieses der Hydropfeder zugeführt.

In einer vereinfachten Ausführungsform kann auf die Messung des Drucks im Dosierzylinder 2 verzichtet werden, was zur Folge hat, dass der Korrekturfaktor $\Delta V_{H3} = V_D - V_D * p_H/p_{D2}$ nicht berechnet werden kann und somit vernachlässigt werden muss. Trotzdem ist das Kompensationsvolumen Vk näherungsweise berechenbar.

Werden, wie in Figur 3 dargestellt, mehrere Hydropfedern 1 verwendet, so kann nacheinander für jede Hydropfeder 1 ein Kompensationsvolumen Vk berechnet werden, und dieses, durch eine entsprechende Ansteuerung der Steuerventile 4, jeder einzelnen Hydropfeder 1 individuell zu- oder abgeführt werden. Es ist auch möglich alle Hydropfedern 1 gleichzeitig Fluid leitend mit dem Dosierzylinder 2 zu verbinden, um gleichzeitig allen Hydropfedern 1 ein Kompensationsvolumen Vk zu- oder abzuführen.

Bei einem Kettenfahrzeug sind die Hydropfedern 1 derart ansteuerbar, dass das Kettenfahrzeug in einer Ruhelage temperaturunabhängig dieselbe Höhe aufweist, was zur Folge hat, dass das Kettenfahrzeug in der Ruhelage temperaturunabhängig auch dieselbe Kettspannung aufweist. Es besteht natürlich die Möglichkeit dieses Korrektursystem abzuschalten wenn das Kettenfahrzeug nicht betrieben wird, z.B. während einem Stillstand über Nacht. Üblicherweise sinkt die Temperatur während der Nacht, sodass sich die Hydropfedern 1 zusammenziehen und der Aufbau oder Rahmen des Kettenfahrzeuges leicht nach unten sinkt, wobei sich auch die Kettspannung reduziert. Wenn das Kettenfahrzeug am nächsten Morgen wieder in Betrieb genommen wird kann die Temperatur des Gases in den Hydropfedern gemessen werden, und daraufhin den Hydropfedern ein Kompensationsvolumen zugeführt werden, sodass das Kettenfahrzeug wieder die vorgegebene Höhe und Kettenspannung aufweist. Während der anschliessenden Fahrt kann sich das Gas in der Hydropfeder relativ schnell erwärmen, sodass den Hydropfedern ein auf Grund der Temperaturmessung berechnetes Kompensationsvolumen entnommen wird, um die vorgegebene Höhe und/oder die Kettenspannung konstant oder in einem vorgegebenen Bandbereich zu halten. Die Gastemperatur der Hydropfeder wird somit insbesondere durch die Aussentemperatur sowie die beim Aus- und Einfedern entstehende Erwärmung beeinflusst.

In einer weiteren, vorteilhaften Ausführungsform ist eine Tabelle vorgegeben, in welcher das erforderliche Kompensationsvolumen Vk in Funktion der Temperatur des Gases in der Gaskammer der Hydropfeder aufgelistet ist. Bei diesem Verfahren muss zur Ermittlung des Kompensationsvolumens nur die Temperatur des Gases in der Hydropfeder gemessen werden, das erforderliche Kompensationsvolumen Vk aus der Tabelle ermittelt werden, und dieses der Hydropfeder 1 zu- oder abgeführt werden.

Das erfindungsgemässe Verfahren hat zur Folge, dass die Hydropfeder unabhängig von der Betriebstemperatur beziehungsweise von der Temperatur des Gases in der Gaskammer der Hydropfeder ein im wesentlichen konstantes Gasvolumen aufweist, sodass die Hydropfeder in einem Grundzustand, d.h. in Ruhelage, eine im wesentliche konstante Länge aufweist, unabhängig von der Temperatur des Gases.

Die hydropneumatische Federungsvorrichtung beziehungsweise das Fahrzeug kann Lagensensoren 16 umfassen, um beispielsweise einen Grundzustand der Federungsvorrichtung oder des Fahrzeuges zu erfassen. Der Lagensensor 16 kann beispielsweise, wie in Figur 1 dargestellt, die Länge der Ein- und Auslenkung der Hydropfeder 1 messen, oder wie in Figur 7 dargestellt, den Drehwinkel zwischen Fahrzeuggehäuse und Hebelarm 19.

In einem vorteilhaften Verfahren werden bei einem Kettenfahrzeug während dem Betrieb, insbesondere während der Fahrt, unterschiedliche Höhen und/oder Kettspannungen vorgegeben und eingestellt, insbesondere in Abhängigkeit von der Beschaffenheit des Untergrundes, über welchen gefahren wird. So wird beispielsweise während der Fahrt durch ein schweres Gelände eine höhere Kettenspannung eingestellt als bei einer Fahrt durch ebenes Gelände, oder umgekehrt.

In einem weiteren vorteilhaften Verfahren wird das Kompensationsvolumen Vk derart berechnet, dass die Hydropfeder in einem Grundzustand unabhängig von Temperaturschwankungen eine vorgebbar definierte Auslenkung aufweist oder eine vorgebbar definierte Auslenkung einnimmt und diese Position unabhängig von Temperaturschwankungen beibehält.

**Patentansprüche**

1. Hydropneumatische Federungsvorrichtung, insbesondere für Radfahrzeuge oder Kettenfahrzeuge, umfassend zumindest eine Hydropfeder (1) mit einer Gaskammer (1h), welche über ein Steuerventil (4) strömungstechnisch mit einer Dosiervorrichtung (2) verbunden ist, **gekennzeichnet durch** einen Sensor (6,7) zur Bestimmung der Temperatur des Gases in der Gaskammer (1h), sowie **gekennzeichnet durch** eine Ansteuerungsvorrichtung (3), wobei die Ansteuerungsvorrichtung (3) derart ausgestaltet ist, dass sie den Messwert des Sensors (6) erfasst, daraus ein Kompensationsvolumen (Vk) berechnet, und die Dosiervorrichtung (2) und das Steuerventil (4) derart ansteuert, dass der Gaskammer (1h) das Kompensationsvolumen (Vk) zu- oder abführbar ist.

2. Hydropneumatische Federungsvorrichtung nach Anspruch 1 umfassend einen Drucksensor (8) zum Erfassen des Drucks der Dosiervorrichtung (2), und/oder umfassend einen Temperatursensor (15) zum Erfassen der Temperatur des Gases der Dosiervorrichtung (2), wobei die Sensoren (8,15) signalleitend mit der Ansteuervorrichtung (3) verbunden sind.

3. Hydropneumatische Federungsvorrichtung nach einem der vorhergehenden Ansprüche, **dadurch gekennzeichnet, dass** die Dosiervorrichtung (2) einen elektrischen Antrieb (11) umfasst, welcher die Dosiervorrichtung (2) antreibt und welcher mit der Ansteuerungsvorrichtung (3) signalleitend verbunden ist.

4. Hydropneumatische Federungsvorrichtung nach einem der vorhergehenden Ansprüche, **dadurch gekennzeichnet, dass** die Hydropfeder (1) einen Lagensensor (16) umfasst, um die Länge der Hydropfeder (1) oder die Drehung der Hydropfeder (1) bezüglich einer Referenzlage zu messen.

5. Hydropneumatische Federungsvorrichtung nach einem der vorhergehenden Ansprüche, **dadurch gekennzeichnet, dass** zumindest zwei Hydropfedern (1) über je ein Steuerventil (4) strömungstechnisch mit der Dosiervorrichtung (2) verbunden sind.

6. Hydropneumatische Federungsvorrichtung nach einem der vorhergehenden Ansprüche, **dadurch gekennzeichnet, dass** eine Mehrzahl von Hydropfedern (1) an einem gemeinsamen Laufwerkträger (17) angeordnet sind.

7. Hydropneumatische Federungsvorrichtung nach einem der vorhergehenden Ansprüche, **dadurch gekennzeichnet, dass** eine umlaufende Kette (14) von einem Kettenlaufwerk getragen ist, und dass die Hydropfeder (1) derart auf die Kette (14) einwirkend angeordnet und ansteuerbar ist, dass die Kette (14) in einem Grundzustand unabhängig von Temperaturveränderungen eine im wesentlichen konstante Spannung aufweist.

8. Laufwerk umfassend eine hydropneumatische Federungsvorrichtung nach einem der vorhergehenden Ansprüche, **dadurch gekennzeichnet, dass** an einem gemeinsamen Laufwerkträger (17) eine Mehrzahl von Rädern oder Rollen (12a,12b,12c,12d,12e,13a,13b) angeordnet sind, wobei zumindest eine der Räder oder Rollen (12a,12b, 12c,12d,12e,13a,13b) über eine Hydropfeder (1) mit dem gemeinsamen Laufwerkträger (17) verbunden ist.

9. Laufwerk nach Anspruch 8, **dadurch gekennzeichnet, dass** die Rollen (12a,12b,12c,12d,12e,13a,13b) derart angeordnet sind, dass an ihnen eine umlaufende Kette (14) anliegt.

10. Laufwerk nach einem der Ansprüche 8 oder 9, **dadurch gekennzeichnet, dass** dieses eine separate Einheit bildet, welche das gesamte linke oder rechte Laufwerk eines Rad- oder Kettenfahrzeuges umfasst.

11. Verfahren zum Steuern einer hydropneumatischen Federungsvorrichtung, insbesondere der Federungsvorrichtung eines Radfahrzeuges oder eines Kettenfahrzeuges, umfassend zumindest eine Hydropfeder (1), die strömungstechnisch mit einer Dosiervorrichtung (2) verbindbar ist, **dadurch gekennzeichnet, dass** die Temperatur des Gases in der Gaskammer (1h) der Hydropfeder (1) gemessen wird, in Abhängigkeit dieses gemessenen Wertes ein Kompensationsvolumen (Vk) bestimmt wird, und die Dosiervorrichtung (2) derart angesteuert wird, dass diese das Kompensationsvolumen (Vk) an die Gaskammer (1h) abgibt oder der Gaskammer (1h) entnimmt.

12. Verfahren nach Anspruch 11, **dadurch gekennzeichnet, dass** das Kompensationsvolumen (Vk) derart berechnet wird, dass die Hydropfeder (1) in einem Grundzustand unabhängig von Temperaturschwankungen eine im wesentlichen konstante oder eine vorgebbar definierte Auslenkung aufweist.

13. Verfahren nach einem der Ansprüche 11 oder 12, **dadurch gekennzeichnet, dass** eine Mehrzahl von Hydropfedern (1) einzeln oder gemeinsam fluidleitend mit der Dosiervorrichtung (2) verbindbar sind, und dass das Kompensationsvolumen (Vk) den Hydropfedern (1) einzeln nacheinander oder gemeinsam zugeführt oder entnommen wird.

14. Verfahren nach einem der Ansprüche 11 bis 13, **dadurch gekennzeichnet, dass** die Hydropfedern (1) eines Rad- oder Kettenfahrzeuges derart mit einem Kompensationsvolumen (Vk) versorgt werden, dass das Fahrzeug in einem Grundzustand eine im wesentlichen konstante Höhe aufweist, unabhängig von der Temperatur des Gases in der Gaskammer (1h) der Hydropfedern (1).

15. Verfahren nach einem der Ansprüche 11 bis 14, **dadurch gekennzeichnet, dass** die Hydropfedern (1) eines Kettenfahrzeuges derart mit einem Kompensationsvolumen (Vk) versorgt werden, dass die Kette unabhängig von Temperaturveränderungen eine im wesentlichen konstante Spannung aufweist oder dass sich die Spannung der Kette in einem vorgebbaren Spannungsbereich bewegt.

16. Verfahren nach einem der Ansprüche 11 bis 15, **dadurch gekennzeichnet, dass** während dem Betrieb unterschiedliche Höhen und/oder Kettspannungen eingestellt werden, insbesondere in Abhängigkeit von der Beschaffenheit des Untergrundes, über welchen gefahren wird.

17. Verfahren nach einem der Ansprüche 11 bis 16, **dadurch gekennzeichnet, dass** die Hydropfedern (1) bei der Inbetriebnahmen des Rad- oder Kettenfahrzeuges derart mit einem Kompensationsvolumen (Vk) versorgt werden, dass das Fahrzeug einen vorgebbaren Grundzustand, insbesondere eine vorgebbare Höhe und/oder Kettspannung aufweist.

18. Fahrzeug oder Kettenfahrzeug umfassend eine hydropneumatische Federungsvorrichtung nach einem der Ansprüche 1 bis 7 oder einen Laufwerkträger nach einem der Ansprüche 8 bis 10 oder betrieben nach einem Verfahren der Ansprüche 11 bis 17.

## Claims

1. Hydropneumatic suspension apparatus, in particular for wheele vehicles or tracked vehicles including at least one hydrospring (1) with a gas chamber (1h) which is connected flow-wise with a metering device (2) via a control valve (4), **characterised by** a sensor (6,7) for determining the temperature of the gas in the gas chamber (1h), and also **characterised by** a control device (3), with the control device (3) being designed such that it detects the measured values of the sensor (6), calculates there from a compensation volume (Vk) and controls the metering device (2) and the control valve (4) in such a way that the compensation volume (Vk) can be supplied to or extracted from the gas chamber (1h).

2. Hydropneumatic suspension apparatus according to claim 1, including a pressure sensor (8) for determining the pressure of the metering device (2) and/or including a temperature sensor (15) for determining the temperature of the gas of the metering device (2), with the sensors (8, 15) being connected in a signal-transmitting manner to the control device (3).

3. Hydropneumatic suspension apparatus in accordance with one of the preceding claims, **characterised in that** the metering device (2) includes an electrical drive (11) which drives the metering device (2) and which is connected in signal-transmitting manner to the control device (3).

4. Hydropneumatic suspension apparatus in accordance with one of the preceding claims, **characterised in that** the hydrospring (1) comprises a position sensor (16) to measure the length of the hydrospring (1) or the rotation of the hydrospring (1) with respect to a reference position.

5. Hydropneumatic suspension apparatus in accordance with one of the preceding claims, **characterised in that** at least two hydrosprings (1) are each connected flow-wise to the metering device (2) via a respective control valve (4).

6. Hydropneumatic suspension apparatus in accordance with one of the preceding claims, **characterised in that** a plurality of hydrosprings (1) are arranged on a common running gear support (17).

7. Hydropneumatic suspension apparatus in accordance with one of the preceding claims, **characterised in that** a circulating track (14) is carried by a track running gear, and **in that** the hydrosprings (1) are arranged so that they act on the track (14) and controllable such that the track (14) has a substantially constant tension in a base state independent of temperature changes.

8. Running gear comprising a hydropneumatic suspension apparatus in accordance with one of the preceding claims, **characterised in that** a plurality of wheels or rollers (12a, 12b, 12c, 12d, 12e, 13a, 13b) are arranged on a common running gear support (17), with at least one of the wheels or rollers (12a, 12b, 12c, 12d, 12e, 13a, 13b) being connected to the common running gear support (17) via a hydrospring (1).

9. Running gear in accordance with claim 8, **characterised in that** the rollers (12a, 12b, 12c, 12d, 12e, 13a, 13b) are arranged in such a way that a circulating track (14) lies on them.

**10.** Running gear in accordance with one of the claims 8 or 9, **characterised in that** it forms a separate unit which includes the entire left or right running gear of a wheeled or tracked vehicle.

**11.** Method for the controlling of a hydropneumatic suspension apparatus, in particular the suspension apparatus of a wheeled vehicle or a tracked vehicle including at least one hydrospring (1) which can be connected flow-wise to a metering device (2), **characterised in that** the temperature of the gas in the gas chamber (1h) of the hydrospring (1) being measured, that depending on this measured value a compensation volume (Vk) is determined, and that the metering device (2) is controlled in such a way, that the metering device (2) supplies the gas chamber (1h) with the compensation volume (Vk) or that the metering device (2) extracts the compensation volume (Vk) from the gas chamber (1h).

**12.** Method in accordance with claim 11, **characterized in that** the compensation volume (Vk) is determined in such a way that the hydrospring (1) has a substantially constant or a presetable defined deflection in a base state independent of temperature.

**13.** Method in accordance with one of the claims 11 to 12, **characterized in that** a plurality of hydrosprings (1) are singly or jointly connectable in fluid-transmitting manner to the metering device (2) and **in that** the compensation volume (Vk) can be supplied to or extracted from the hydrosprings (1) individually one after the other or jointly.

**14.** Method in accordance with one of the claims 11 to 13, **characterized in that** the hydrosprings (1) of a wheeled vehicle or tracked vehicle are supplied with a compensation volume (Vk) in such a way that the vehicle has a substantially constant height in a base state independent of the temperature of the gas in the gas chamber (1h) of the hydrosprings (1).

**15.** Method in accordance with one of the claims 11 to 14, **characterized in that** the hydrosprings (1) of a tracked vehicle are supplied with a compensation volume (Vk) in such a way that the track has a substantially constant tension independent of temperature changes or in that the tension of the track moves in a predeterminable tension range.

**16.** Method in accordance with one of the claims 11 to 15, **characterized in that** different heights and/or track tensions are set during the operation, in particular in dependence on the nature of the terrain which is being travelled on.

**17.** Method in accordance with one of the claims 11 to 16, **characterized in that** the hydrosprings (1) are supplied with a compensation volume (Vk) on starting up the wheeled vehicle or the tracked vehicle in such a way that the vehicle has a preset base state, in particular a predeterminable height and/or track tension.

**18.** Vehicle or tracked vehicle including a hydropneumatic suspension apparatus in accordance with one of the claims 1 to 7 or a running gear support in accordance with one of the claims 8 to 10 or operated in accordance with a method of the claims 11 to 17.

**Revendications**

**1.** Dispositif de suspension hydropneumatique, en particulier pour des véhicules à roues ou des véhicules chenillés, comprenant au moins un ressort hydraulique (1) comportant une chambre à gaz (1h) laquelle est reliée, sur le plan de la technique des fluides, à un dispositif de dosage (2) par l'intermédiaire d'une soupape de commande (4), **caractérisé par** un capteur (6, 7) destiné à déterminer la température du gaz dans la chambre à gaz (1h), ainsi que **caractérisé par** un dispositif de commande (3), le dispositif de commande (3) étant configuré de telle manière qu'il enregistre la valeur mesurée du capteur (6), calcule à partir de cela un volume de compensation (Vk) et commande le dispositif de dosage (2) et la soupape de commande (4) de telle manière que le volume de compensation (Vk) peut être amené ou évacué de la chambre à gaz (1h).

**2.** Dispositif de suspension hydropneumatique selon la revendication 1 comprenant un capteur de pression (8) destiné à mesurer la pression du dispositif de dosage (2), et/ou comprenant un capteur de température (15) destiné à mesurer la température du gaz du dispositif de dosage (2), les capteurs (8, 15) étant reliés au dispositif de commande (3) de manière à transmettre des signaux.

**3.** Dispositif de suspension hydropneumatique selon l'une quelconque des revendications précédentes, **caractérisé**

**en ce que** le dispositif de dosage (2) comprend un entraînement électrique (11), lequel entraîne le dispositif de dosage (2) et lequel est relié au dispositif de commande (3) de manière à transmettre des signaux.

4. Dispositif de suspension hydropneumatique selon l'une quelconque des revendications précédentes, **caractérisé en ce que** le ressort hydraulique (1) comprend un capteur de position (16) pour mesurer la longueur du ressort hydraulique (1) ou la rotation du ressort hydraulique (1) par rapport à une position de référence.

5. Dispositif de suspension hydropneumatique selon l'une quelconque des revendications précédentes, **caractérisé en ce que** au moins deux ressorts hydrauliques (1) sont reliés, sur le plan de la technique des fluides, au dispositif de dosage (2) par l'intermédiaire de respectivement une soupape de commande (4).

6. Dispositif de suspension hydropneumatique selon l'une quelconque des revendications précédentes, **caractérisé en ce qu'**une pluralité de ressorts hydrauliques (1) est disposée sur un support commun de train de roulement (17).

7. Dispositif de suspension hydropneumatique selon l'une quelconque des revendications précédentes, **caractérisé en ce qu'**une chenille circulaire (14) est portée par un train de roulement de chenille, et **en ce que** le ressort hydraulique (1) peut être commandé et est disposé de manière à agir de telle manière sur la chenille (14) que la chenille (14) comporte dans un état initial une tension essentiellement constante, indépendamment des variations de température.

8. Train de roulement comprenant un dispositif de suspension hydropneumatique selon l'une quelconque des revendications précédentes, **caractérisé en ce qu'**une pluralité de roues ou de rouleaux (12a, 12b, 12c, 12d, 12e, 13a, 13b) est disposée sur un support commun de train de roulement (17), au moins une des roues ou rouleaux (12a, 12b, 12c, 12d, 12e, 13a, 13b) étant reliée au support commun de train de roulement (17) par l'intermédiaire d'un ressort hydraulique (1).

9. Train de roulement selon la revendication 8, **caractérisé en ce que** les rouleaux (12a, 12b, 12c, 12d, 12e, 13a, 13b) sont disposés de telle manière qu'une chenille entourante (14) est appliquée contre eux.

10. Train de roulement selon l'une quelconque des revendications 8 ou 9, **caractérisé en ce que** celui-ci forme une unité séparée, laquelle comprend tout le train de roulement gauche ou droit d'un véhicule à roues ou chenillé.

11. Procédé pour commander un dispositif de suspension hydropneumatique, en particulier le dispositif de suspension d'un véhicule à roues ou d'un véhicule chenillé, comprenant au moins un ressort hydraulique (1) qui peut être relié sur le plan de la technique des fluides à un dispositif de dosage (2), **caractérisé en ce que** la température du gaz dans la chambre à gaz (1h) du ressort hydraulique (1) est mesurée, en fonction de cette valeur mesurée un volume de compensation (Vk) est déterminé, et le dispositif de dosage (2) est commandé de telle manière que celui-ci cède le volume de compensation (Vk) à la chambre à gaz (1h) ou le prélève de la chambre à gaz (1h).

12. Procédé selon la revendication 11, **caractérisé en ce que** le volume de compensation (Vk) est calculé de telle manière que le ressort hydraulique (1) comporte dans un état initial, indépendamment des variations de température, une excursion essentiellement constante ou pouvant être prédéfinie.

13. Procédé selon l'une quelconque des revendications 11 ou 12, **caractérisé en ce qu'**une pluralité de ressorts hydrauliques (1) peuvent être reliés individuellement ou en commun au dispositif de dosage (2) de manière à conduire le fluide, et **en ce que** le volume de compensation (Vk) est amené aux ressorts hydrauliques (1) ou prélevé de ceux-ci successivement de manière individuelle ou en commun.

14. Procédé selon l'une quelconque des revendications 11 à 13, **caractérisé en ce que** les ressorts hydrauliques (1) d'un véhicule à roues ou chenillé sont alimentés avec un volume de compensation (Vk) de telle manière que le véhicule comporte dans un état initial une hauteur essentiellement constante, indépendamment de la température du gaz dans la chambre à gaz (1h) des ressorts hydrauliques (1).

15. Procédé selon l'une quelconque des revendications 11 à 14, **caractérisé en ce que** les ressorts hydrauliques (1) d'un véhicule chenillé sont alimentés avec un volume de compensation (Vk) de telle manière que la chenille comporte, indépendamment des variations de température, une tension sensiblement constante, ou que la tension de la chenille oscille dans une plage de tension pouvant être prédéterminée.

**16.** Procédé selon l'une quelconque des revendications 11 à 15, **caractérisé en ce que** pendant le service différentes hauteurs et/ou tensions de chenille sont réglées, en particulier en fonction de la nature du sol sur lequel le véhicule roule.

**17.** Procédé selon l'une quelconque des revendications 11 à 16, **caractérisé en ce que** lors de la mise en service du véhicule à roues ou chenillé les ressorts hydrauliques (1) sont alimentés avec un volume de compensation (Vk) de telle manière que le véhicule comporte un état initial pouvant être prédéterminé, notamment une hauteur et/ou tension de chenille pouvant être prédéterminée.

**18.** Véhicule ou véhicule chenillé comprenant un dispositif de suspension hydropneumatique selon l'une quelconque des revendications 1 à 7 ou un support de train de roulement selon l'une quelconque des revendications 8 à 10 ou fonctionnant selon un procédé des revendications 11 à 17.

## Fig.1

## Fig.2

## Fig.3

## Fig.4

# Fig.5

# Fig.6

# Fig.7

**EP 1 559 596 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 04090917 A